# EUROPÄISCHE PATENTSCHRIFT

(11) **EP 2 573 337 B1**
(45) Veröffentlichungstag und Bekanntmachung des Hinweises auf die Patenterteilung: **12.11.2014**
(21) Anmeldenummer: 11007760.9
(22) Anmeldetag: 23.09.2011
(51) Int. Cl.: F01L 7/16, F16K 3/36, F01L 5/24

(54) **Anordnung eines Schieberventils und eines Dichtungssystems zum Abdichten des Schieberventils bei einer Wärmekraftmaschine**
Assembly of a gate valve and a seal system for sealing the gate valve of a thermal engine
Agencement d'une soupape à tiroir et d'un système d'étanchéité pour l'étanchéification de la soupape à tiroir dans un moteur thermique

(43) Veröffentlichungstag der Anmeldung: 27.03.2013
(73) Patentinhaber: Hofmann, Arno, 63571 Gelnhausen (DE)
(72) Erfinder: Hofmann, Arno, 63571 Gelnhausen (DE)
(74) Vertreter: Quermann, Helmut

(56) Entgegenhaltungen:
- EP-A1- 1 132 579
- WO-A1-03/046341
- AU-A1- 2004 321 737
- DE-A1- 10 232 816
- GB-A- 1 601 674
- US-A- 3 871 340
- US-A- 5 615 548
- US-A1- 2004 099 236

## Beschreibung

Die Erfindung betrifft eine Anordnung eines Schieberventils und eines Dichtungssystems zum Abdichten des Schieberventils, mit einer Feststoffschmierung zwischen Schieberventil und Dichtungssystem, zur Verwendung bei einer Wärmekraftmaschine, wobei das Schieberventil eine Gleitdichtfläche aufweist, auf der das Dichtungssystem gleitet, das einen Arbeitsraum und/oder Leitungen der Wärmekraftmaschine zumindest temporär abdichtet. Schiebersteuerungen, insbesondere Drehschiebersteuerungen sind seit Beginn der Motorenentwicklung bekannt. Insbesondere bereitet die Abdichtung des druckbeaufschlagten Arbeitsraumes zu den gasführenden Kanälen unter Einbeziehung eines beweglichen Schieberventils Probleme hinsichtlich Dichtwirkung, Reibung und Verschleiß.

In den letzten Jahren sind mehrere Dichtungssysteme für Drehschiebersteuerungen bekannt geworden, die den Brennraum eines Verbrennungsmotors gegen ein rotierendes Schieberventil abdichten. Diese sind beispielsweise in den Druckschriften AU 2004/321,737 B2, CA 2,474,598 A1, US 7,621,249 B2, EP 0 673 471 B1, EP 1 428 990 A1 und EP 1 170 467 B1 beschrieben.

In den Schriften AU 2004/321,737 B2 und CA 2,474,598 A1 wird explizit auf eine externe Schmierung für den angestrebten Trockenlauf verzichtet. Der Festschmierstoff wird einem Gleitdichtring des Dichtungssystems, der komplett aus Kohlekeramik besteht, durch Abrieb entnommen, bzw. wird durch einen Kohlekeramikring, der in den metallischen Gleitdichtring des Dichtungssystems eingepresst ist, durch Abrieb auf die Gleitdichtfläche aufgebracht.

Die Schrift US 7,621,249 B2 behandelt eine Gitterdichtgrenze mit Dichtleisten, ähnlich den Abdichtungsprinzipien von Felix Wankel. Die EP 0 673 471 B1 erwähnt eine Ölschmierung für die Schmierung einer solchen Gitterdichtgrenze.

In der EP 1 170 467 B1 wird ein Dichtungssystem beschrieben, das auf einen Gleitdichtring mit guten Gleiteigenschaften verweist.

Die Druckschrift DE10232816 A1 offenbart einen Schmierfilz, der ein vom Dichtungssystem unabhängiges Bauteil darstellt.

Die eingangs aufgeführten Schriften, sofern sie sich auf den Trockenlauf des Dichtungssystems beziehen, haben den Festschmierstofflieferanten in die Gleitdichtfläche des Dichtungssystems integriert, bzw. ist der Gleitdichtring selbst aus schmierfähigem Material hergestellt.

Gleitpaarungen für Trockenlauf werden häufig auf Basis von keramischen oder hartmetallischen Oberflächen der Schieberventile gegen kohlenstoffhaltige oder kunstoffhaltige (Peek, PTFE-ähnliche) Gleitelemente ausgeführt.

Im Trockenlauf liegt die Verschleißrate der Festschmierstoff liefernden Gleitelemente in der Größenordnung von etwa 1 µm/h. Je nach Einsatzbelastung (Temperatur, Flächenpressung und Gleitgeschwindigkeit) und begrenzendem zulässigen pv-Wert, können sich aber auch Verschleißwerte bis über 10µm/h einstellen. Die hohen Verschleißraten trocken laufender, d.h. selbstschmierender Werkstoffe beruhen großteils auf Mangelschmierung, da diese Werkstoffe nicht nur Festschmierstoff, sondern auch festigkeitssteigernde und temperaturresistente Komponenten enthalten müssen. Betrachtet man die in den heutigen Maschinenanwendungen (Verbrennungsmotoren, Dampfmaschinen) erforderlichen Lebensdauern für Schiebersteuerungen
- Zweirad 1000 h
- PKW 4000 h
- NFZ 15000 h
- Industrieanlagen 17000 h (2 Jahre Dauereinsatz)
und stellt diese Laufzeiten den o. g. Verschleißraten gegenüber, so ergeben sich Materialabträge zwischen 1 bis 17mm, bei 1µm/h Verschleißrate. Die dementsprechend vorzuhaltenden Materialzugaben sind oftmals in den gegebenen Platzverhältnissen, insbesondere in Arbeitsräumen von Verbrennungsmotoren in die Gleitdichtelemente von Dichtungssystemen räumlich nicht integrierbar bzw. hätten negative Auswirkungen auf den Wirkungsgrad der Maschine durch eine zunehmende räumliche Zerklüftung eines grundsätzlich angestrebten kompakten Arbeitsraums. Die technisch bedingten Verschleißraten bekannter Werkstoffe, die für Trockenlauf geeignet sind, haben eine breite Anwendung von Schieberventilen mit korrespondierenden Dichtungssystemen, insbesondere zur Steuerung des Gaswechsels in Verbrennungsmotoren, bis heute verhindert, da geforderte Standzeiten der Bauteile nicht erreicht wurden.

Unter Berücksichtigung der ökologischen Gründe, aus Wärmekraftmaschinen (Verbrennungsmotoren, Dampfmaschinen) keine ölhaltigen Schmierstoffe austreten zu lassen, wird unter tribologischen Aspekten eine Weiterbildung der eingangs genannten Anordnung beschrieben, die den Trockenlauf von Dichtungssystemen gegen Schieberventile in Wärmekraftmaschinen ermöglicht, ohne dabei die eingangs erwähnten hohen Verschleißraten an den Gleitdichtflächen von Dichtungssystemen hervorzurufen.

Die Reduzierung der Verschleißraten wird durch eine Anordnung mit den Merkmalen des Anspruchs 1 erreicht. Der notwendige Festschmierstoff für den Trocken lauf ist somit nicht mehr ausschließlich in den Gleitdichtflächen des Dichtungssystems bzw. Schieberventils gebunden und wird durch Abrieb freigelegt, sondern wird insbesondere durch den zusätzlichen Festschmierstoffabriebskörper zur Verfügung gestellt, der mindestens eine der zu schmierenden Oberflächen des tribologischen Systems Schieberventil/Dichtungssystem berührt, durch Abrieb seiner selbst Festschmierstoff auf die Gleitfläche(n) aufbringt und die Dichtgrenze des Dichtungssystems in Geometrie und lokaler Anordnung unberührt lässt, d.h. der Festschmierstoffabriebskörper ist nicht Bestandteil des Dichtungssystems.

Der Festschmierstoffabriebskörper besteht bevorzugt aus Material hoher Schmierfähigkeit und geringerer Festigkeit, so dass aus dessen physikalischen Werkstoffwerten und einer einzustellenden Anpresskraft des Festschmierstoffabriebskörpers an die Gleitfläche(n) sich ein kontrollierter Materialabtrag am Festschmierstoffabriebskörper ergibt, der, wenn notwendig, mehr Festschmierstoff für die Trockenschmierung von Schieberventil und Dichtungssystem liefert, als die beiden Gleitpartner durch Abrieb ihrer selbst zur Verfügung stellen könnten. Der Festschmierstoffabriebskörper ist somit alleiniger bzw. dominierender Spender von Festschmierstoff. Für den Festschmierstoffabriebskörper können sich somit Verschleißraten ergeben, die weit über den eingangs erwähnten Verschleißraten von selbstschmierenden Werkstoffen (1-10µm/h) liegen, wobei dies für die Funktion des Festschmierstoffabriebskörpers unerheblich ist, da durch dessen konstruktive Auslegung ausreichend Materialvorlage vorgesehen werden kann. Der Verschleiß an Schieberventil-Dichtungssystem kann somit wesentlich reduziert werden, da Mangelschmierung verhindert werden kann, bevorzugt durch ein erheblich gesteigertes Angebot an abgeriebenem Festschmierstoff des Festschmierstoffabriebskörpers.

Die erfindungsgemäße Anordnung ermöglicht es, die Werkstoffpaarung Dichtungssystem / Schieberventil gezielt gegen abrasiven Verschleiß, aber auch auf Temperaturbeständigkeit und Festigkeit und weniger auf Abgabe von Festschmierstoff auszulegen. Die thermo-mechanische Belastbarkeit (pv-Wert) der Werkstoffpaarung wird dadurch erhöht. An dem Festschmierstoffabriebskörper sind hohe Verschleißraten für die Dichtwirkung des Schieberventils zum Dichtungssystem ohne Einfluss, da der Festschmierstoffabriebskörper einen vom Dichtungssystem in Funktion, lokaler Anordnung und Geometrie unabhängigen Körper darstellt.

In Drehschiebersteuerungen (rotierende Gleitfläche) kann der Festschmierstoffabriebskörper in Positionen angeordnet sein, die vom Dichtungssystem weit entfernt sind, so dass die Geometrie bzw. Einbausituation des Dichtungssystems vom Festschmierstoffabriebskörper nicht beeinflusst wird. In oszillierende Schiebersteuerungen sollte der Festschmierstoffabriebskörper in solcher Entfernung zum Dichtungssystem positioniert sein, dass die tatsächliche Gleitdichtfläche des Schieberventils auch den Festschmierstoffabriebskörper überstreicht, d. h. der Abstand Dichtungssystem- Festschmierstoffabriebskörper sollte kleiner gleich dem Oszillationshub des Schieberventils sein. Die berührende Gleitdichtfläche des Schieberventils ist insbesondere eben, kugelförmig, zylindrisch oder konisch ausgebildet.

Der Festschmierstoffabriebskörper benetzt zumindest einen Teil bis hin zur kompletten, mit dem Dichtungssystem überfahrenen Dichtfläche des Schieberventils. Durch die Relativbewegung des Dichtungssystems zur Dichtfläche des Schieberventils verteilt sich der Festschmierstoff zwischen den Gleitpartnern.

Der Festschmierstoffabriebskörper kann bei räumlicher Verfügbarkeit kostengünstig das Dichtungssystem umschlingen. Ein Gleitdichtring (Dichtgrenze), der die Abdichtung zwischen Arbeitsraum bzw. Kanal und Schieberventil übernimmt, ist von einem konzentrischen Festschmierstoffabriebskörper umgeben, der im Gehäuse radial positioniert ist und den Gleitdichtring radial führt. An der umlaufenden Trennfläche zwischen Festschmierstoffabriebskörper und Gleitdichtring kann sich eine zur Gleitfläche des Schieberventils umlaufende offene Nut befinden, die zur Niederdruckseite offen ist. Diese Nut wirkt als Druckentlastung für den Festschmierstoffabriebskörper, so dass ausschließlich der Gleitdichtring als Dichtgrenze wirkt. Die Druckentlastung über eine Nut bewirkt einen substanziellen Funktionsunterschied zur AU002004321737B2, deren Keramikkohlering einen Teil der Dichtfläche darstellt. Ist der Festschmierstoffabriebskörper mit dem Gleitdichtring axial fest verbunden, so sind die Verschleißraten (in µm/h) beider Bauteile identisch. Die abgeriebene Menge an Festschmierstoff im Verhältnis zum Abrieb am Gleitdichtring wird über die radiale Wandstärke des Festschmierstoffabriebskörpers festgelegt. Ist der Festschmierstoffabriebskörper mit dem Gleitdichtring nur radial fixiert und gegen diesen axial verschiebbar, so kann der Festschmierstoffabriebskörper durch eine separate Anpresskraft, z. B. Federkraft, gegen die Gleitdichtfläche des Schieberventils gedrückt werden. Dadurch kann der Materialabtrag am Festschmierstoffabriebskörper in seiner axialen Höhe unabhängig vom Materialabtrag des Gleitdichtringes eingestellt werden.

Einhergehend zu den beschriebenen Modifizierungen wird explizit erwähnt, dass die Geometrie des Festschmierstoffabriebskörpers grundsätzlich unabhängig von der Geometrie der Dichtgrenze des Dichtungssystems ist, solange der Anspruch 1 erfüllt wird. Insbesondere sind Querschnittsgeometrien des Festschmierstoffabriebskörpers kostengünstig in Zylinder-, Quader-, Ringform darstellbar. Auch Dichtgrenzen, die aus mehreren Bauteilen (Dichtleisten nach Wankel) bestehen (US7621249B2, EP0673471B1), können mittels eines oder mehreren Festschmierstoffabriebskörper(n) mit Festschmierstoff versorgt werden.

Als Materialien für den Festschmierstoffabriebskörper bieten sich zum einen Festschmierstoffe auf Kohlenstoffbasis an. Vorzugsweise sind hier sogenannte Elektrographite nennen, da diese einen hohen Anteil des Festschmierstoffs Graphit enthalten, geringe Härte besitzen und daher einen relativ hohen Materialabrieb (Verschleißrate) bei geringen Anpresskräften erlauben. Zum anderen gibt es ein breites Auswahlspektrum an Kunststoffen, die ausgezeichnete Schmierfähigkeit besitzen und sich daher als Festschmierstoffabriebskörper eignen. Zu nennen sind vor allem die Fluorhaltigen Thermoplaste wie PTFE etc. Vorteilhafter Weise können auch Werkstoffe, die Kohlenstoff und Kunststoffkomponenten (z. B. Graphit-PTFE) enthalten, eingesetzt werden.

Bevorzugte Weiterbildungen der Erfindung und deren Vorteile ergeben sich aus den Unteransprüchen, der nachfolgenden Beschreibung der Figuren sowie den Figuren selbst. Es wird hierbei bemerkt, dass alle Einzelmerkmale und alle Kombinationen von Einzelmerkmalen erfindungswesentlich sind.

In den Figuren ist die Erfindung anhand mehrerer Ausführungsbeispiele der Anordnung von Schieberventil, Dichtungssystem und Festschmierstoffabriebskörper veranschaulicht, ohne auf diese Ausführungsbeispiele beschränkt zu sein. Es zeigt:
- Fig.1: eine räumliche Darstellung eines ersten Ausführungsbeispiels der erfindungsgemäßen Anordnung, senkrecht zur Drehachse des Schieberventils geschnitten,
- Fig. 2 und 3: entsprechende räumliche Darstellungen im Schnitt einer zweiten und dritten Ausführungsform der erfindungsgemäßen Anordnung.

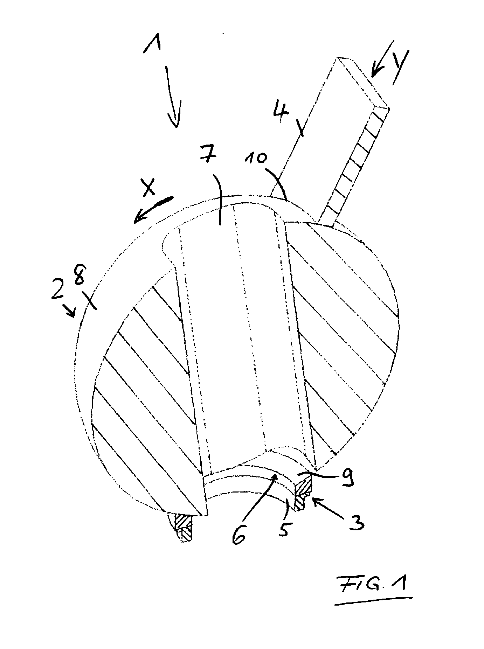

Die in Fig. 1 gezeigte Anordnung 1 findet Verwendung bei einer Wärmekraftmaschine. Die Anordnung weist ein Schieberventil 2, ein Dichtungssystem 3 und einen Festschmierstoffabriebskörper 4 auf. Bestandteil des Dichtungssystems 3 bildet ein Radialdichtring 5 und ein Gleitdichtring 6. Der Radialdichtring 5 liegt axial am Gleitdichtring 6 an, auf der dem Radialdichtring abgewandten Seite kontaktiert der Gleitdichtring 6 das Schieberventil 2.

Die gezeigte Anordnung 1 ist bezüglich des jeweiligen Einzelteiles der Anordnung 1 symmetrisch geschnitten. Veranschaulicht ist ein das Schieberventil 2 durchsetzender Kanal 7. In der in der Fig. gezeigten Stellung des Schieberventils 2 gibt dieser größtenteils die durch den Gleitdichtring 6 und den Radialdichtring 5 definierte Durchlassöffnung des Dichtungssystems 3 frei. Durch Drehen des Schieberventils 2 in Richtung des Pfeiles X um dessen Drehachse kann die Öffnung des Dichtungssystems 3 zunehmend verschlossen werden, bis zum vollständigen Verschluss, bei dem die im radial äußeren Bereich des Schieberventils 2 befindliche Gleitdichtfläche 8 des Schieberventils 2 eine Dichtfläche 9 des Gleitdichtrings 6 auf dessen dem Schieberventil 2 zugewandter Seite vollständig über deren Kreisring kontaktiert.

Nicht veranschaulicht sind Gehäuse bzw. Gehäuseteile zur Aufnahme und Lagerung des Schieberventils 2 sowie zur Aufnahme und Lagerung des Dichtungssystems 3.

Der Kontaktbereich von Schieberventil 2 und Dichtungssystem 3 ist zu schmieren. Dies erfolgt mittels des Festschmierstoffabriebskörpers 4, der auf der dem Dichtungssystem 3 abgewandten Seite des Schieberventils 2 angeordnet ist. Der Festschmierstoffabriebskörper 4 ist plattenförmig ausgebildet und kontaktiert im Bereich einer Schmalseite 10 die Gleitdichtfläche 8 des Schieberventils 2. Die Einwirkung des Festschmierstoffabriebskörpers 4 auf das Schieberventil 2 erfolgt unter Einwirkung einer Feder, die eine Kraft in Richtung des Pfeiles Y auf den Körper 4 ausübt. Der Festschmierstoffabriebskörper 4 ist gleichfalls in einem Gehäuse gelagert und in dessen Längserstreckung geführt, so dass er unter Einwirkung der Kraft definiert gegen das Schieberventil 2 vorgespannt ist.

Der Festschmierstoffabriebskörper 4 stellt ein vom Dichtungssystem 3 unabhängiges Bauteil dar. Er berührt zumindest einen Teil der Gleitdichtfläche 8 des Schieberventils 2 und überträgt bei einer Relativbewegung zur Gleitdichtfläche 8 auf diese Festschmierstoff durch Abrieb. Dieser abgeriebene Festschmierstoff dient zumindest der partiellen Schmierung der Gleitdichtfläche 8.

Grundsätzlich könnte der Festschmierstoffabriebskörper auch derart angeordnet sein, dass er der Schmierung des Dichtungssystems 3 dient, so dass auf diese Weise die gewünschten Schmierbedingungen zwischen Schieberventil 2 und Dichtungssystem 3 erreicht werden.

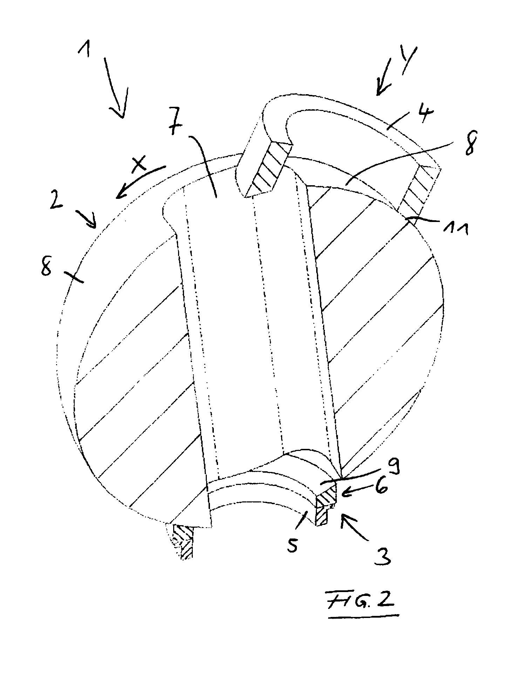

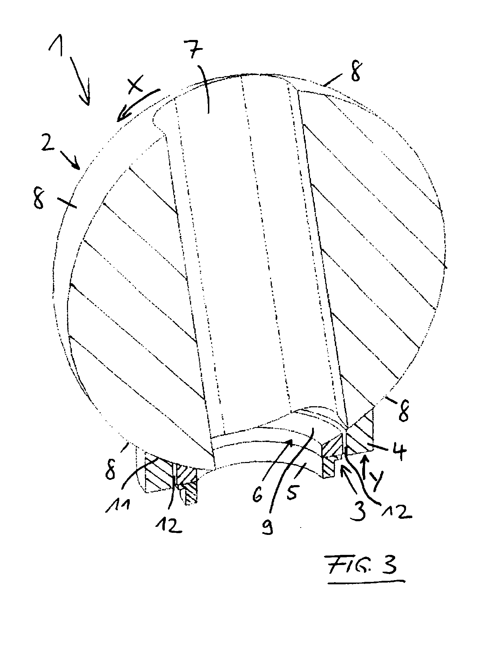

Bei der Ausführungsform gemäß Fig. 2 und 3 sind Bauteile, die bezüglich deren Funktion mit denen der Ausführungsform nach der Fig. 1 entsprechen, mit denselben Bezugsziffern bezeichnet.

Bei der Ausführungsform nach der Fig. 2 ist, genauso wie bei der Ausführungsform gemäß Fig. 1, der Festschmierstoffabriebskörper 4 vom Dichtungssystem 3 weit entfernt angeordnet, so dass die Geometrie bzw. Einbausituation des Dichtungssystems 3 vom Festschmierstoffabriebskörper 4 nicht beeinflusst wird. Allerdings ist im Gegensatz zur Gestaltung des Festschmierstoffabriebskörpers 4 gemäß Ausführungsform nach Fig. 1, der plattenförmig ist, der Festschmierstoffabriebskörper 4 gemäß Ausführungsform nach Fig. 2 als Ring ausgebildet, der axial verschieblich im Gehäuse gelagert ist und sich mit seiner umlaufenden Stirnseite 11 unter Federkraft in Richtung des Pfeiles Y am Schieberventil 2 abstützt.

Bei der Ausführungsform gemäß der Fig. 3 ist der Festschmierstoffabriebskörper 4 im Bereich des Dichtungssystems 3 angeordnet und umschlingt diesen. Der Gleitdichtring 6, der die Abdichtung zwischen Arbeitsraum bzw. Kanal und Schieberventil 2 übernimmt, ist von dem konzentrischen Festschmierstoffabriebskörper 4 umgeben, der im Gehäuse radial positioniert ist und den Gleitdichtring 6 radial führt. An der umlaufenden Trennfläche zwischen Festschmierstoffabriebskörper 4 und Gleitdichtring 6 befindet sich eine zur Gleitdichtfläche 8 des Schieberventils 2 umlaufende offene Nut 12, die zur Niederdruckseite offen ist. Diese Nut 12 wird als Druckentlastung für den Festschmierstoffabriebskörper 4, das ausschließlich der Gleitdichtring 6 als Dichtgrenze wirkt. Der im Gehäuse axial verschieblich gelagerte Festschierstoffabriebskörper 4 stützt sich mit seiner umlaufenden Stirnseite 11 unter Federkraft in Richtung des Pfeiles Y am Schieberventil 2 ab.

## Patentansprüche

1. Anordnung (1) eines Schieberventils (2) und eines Dichtungssystems (3) zum Abdichten des Schieberventils (2), mit einer Feststoffschmierung zwischen Schieberventil (2) und Dichtungssystem (3), zur Verwendung bei einer Wärmekraftmaschine, wobei das Schieberventil (2) eine Gleitdichtfläche (8) aufweist, auf der das Dichtungssystem (3) gleitet, das einen Arbeitsraum und/oder Leitungen der Wärmekraftmaschine zumindest temporär abdichtet, **gekennzeichnet durch** mindestens einen Festschmierstoffabriebskörper (4), der ein vom Dichtungssystem (3) unabhängiges Bauteil darstellt, wobei dieser Festschmierstoffabriebskörper (4) die zu schmierende Oberfläche (8) des Schieberventils (2) des tribologischen Systems von Schieberventil (2) und Dichtungssystem (3) berührt, und der, bei Reiativbewegung zu dieser zu schmierenden Oberfläche (8), auf diese Festschmierstoff **durch** Abrieb überträgt, der zumindest der partiellen Schmierung der Oberfläche (8) dient.

2. Anordnung nach Anspruch 1, **dadurch gekennzeichnet, dass** der Festschmierstoffabriebskörper (4) zumindest einen Teil der Gleitdichtfläche (8) des Schieberventils (2) berührt, und der, bei Relativbewegung zur Gleitdichtfläche (8) des Schieberventils (2) auf diese Festschmierstoff durch Abrieb überträgt, der zumindest der partiellen Schmierung der Gleitdichtfläche (8) des Schieberventils (2) dient.

3. Anordnung nach Anspruch 1 oder 2, **dadurch gekennzeichnet, dass** der Festschmierstoffabriebskörper (4) aus Material besteht, das zumindest partiell Festschmierstoff enthält.

4. Anordnung nach einem der Ansprüche 1 bis 3, **dadurch gekennzeichnet, dass** Festschmierstoffe auf Kohlenstoffbasis und/oder unter Verwendung von Kunststoffen und/oder Metallverbindungen und/oder Gleitlacken zur Anwendung kommen.

5. Anordnung nach einem der Ansprüche 1 bis 4, **dadurch gekennzeichnet, dass** die berührende Gleitdichtfläche (8) des Schieberventils (2) eben, kugelförmig, zylindrisch oder konisch ausgebildet ist.

6. Anordnung nach einem der Ansprüche 1 bis 5, **dadurch gekennzeichnet**, das der Festschmierstoffabriebskörper (4) als leistenförmiges, zylindrisches oder quaderförmiges Profil ausgebildet ist.

7. Anordnung nach einem der Ansprüche 1 bis 6, **dadurch gekennzeichnet, dass** die Festschmierstoffübertragungsrate des Festschmierstoffabriebskörpers (4) auf die Gleitdichtfläche (8) des Schieberventils (2) durch eine Anpresskraft des Festschmierstoffabriebskörpers (4) gegen die Gleitdichtfläche (8) des Schiebers (2) erzeugt wird.

8. Anordnung nach Anspruch 7, **dadurch gekennzeichnet, dass** Anpresskraft des Festschmierstoffabriebskörpers (4) gegen die Gleitdichtfläche (8) des Schiebers (2) durch mechanische Federkraft und/oder pneumatisch und/oder hydraulisch und/oder durch eine Tangentialkraft, die das Schieberventil (2) bei Relativbewegung zum Festschmierstoffabriebskörper (4) aufbaut, erzeugt wird.

9. Anordnung nach einem der Ansprüche 1 bis 8, **dadurch gekennzeichnet, dass** der Festschmierstoffabriebskörper (4) separat vom zu schmierenden Dichtungssystem (3) in einem Gehäuse der Wärmekraftmaschine positioniert ist.

10. Anordnung nach einem der Ansprüche 1 bis 9, **dadurch gekennzeichnet, dass** der Festschmierstoffabriebskörper (4) sich nahe am Dichtungssystem (3) und dessen zu schmierenden Gleitflächen (9) befindet.

11. Anordnung nach einem der Ansprüche 1 bis 10, **dadurch gekennzeichnet, dass** der Festschmierstoffabriebskörper (4) eine Dichtgrenze umgibt oder einen Gleitring (6) des Dichtungssystems (3) konzentrisch umfasst.

12. Anordnung nach einem der Ansprüche 1 bis 11, **dadurch gekennzeichnet, dass** der Festschmierstoffabriebskörper (4) gegen einen Gleitring (6) bzw. ein Dichtelement einer Dichtgrenze des Dichtungssystems (3), gegen die Gleitdichtfläche (8) des Schieberventils (2), verschiebbar oder mit diesem fest verbunden ist.

13. Anordnung nach Anspruch 11 oder 12, **dadurch gekennzeichnet, dass** Gasentlastungskanäle (12) vorgesehen sind, derart, dass der Festschmierstoffabriebskörper (4) durch die Gasentlastungskanäle (12) keinen Einfluss auf die Dichtwirkung des Gleitdichtrings (6) bzw. des Dichtelements einer Dichtgrenze des Dichtungssystems (3) ausübt.

14. Anordnung nach einem der Ansprüche 1 bis 13, **dadurch gekennzeichnet, dass** Mittel vorgesehen sind, mittels derer die Abriebsrate des Festschmierstoffabriebskörpers (4) durch dessen Geometrie, Anpresskraft und Material, unabhängig von der Geometrie und Belastung des zu schmierenden Dichtungssystems (3) einstellbar ist.

## Claims

1. Arrangement (1) of a gate valve (2) and of a seal system (3) for sealing off the gate valve (2), with solid lubrication provided between gate valve (2) and seal system (3), for use in a heat engine, wherein the gate valve (2) has a sliding seal surface (8) on which the seal system (3) slides, which seal system at least temporarily seals off a working chamber and/or conduits of the heat engine, **characterized by** at least one solid lubricant abrasion body (4) which constitutes a component independent of the seal system (3), wherein said solid lubricant abrasion body (4) makes contact with the surface (8) to be lubricated of the gate valve (2) of the tribological system of gate valve (2) and seal system (3), and which, during relative movement with respect to said surface (8) to be lubricated, transfers solid lubricant to said surface by abrasion, which solid lubricant serves for the at least partial lubrication of the surface (8).

2. Arrangement according to Claim 1, **characterized in that** the solid lubricant abrasion body (4) makes contact with at least a part of the sliding seal surface (8) of the gate valve (2), and the solid lubricant abrasion body, during relative movement with respect to the sliding seal surface (8) of the gate valve (2), transfers solid lubricant to said surface by abrasion, which solid lubricant serves for the at least partial lubrication of the sliding seal surface (8) of the gate valve (2).

3. Arrangement according to Claim 1 or 2, **characterized in that** the solid lubricant abrasion body (4) is composed of material which at least partially comprises solid lubricant.

4. Arrangement according to one of Claims 1 to 3, **characterized in that** use is made of carbon-based solid lubricants and/or solid lubricants using plastics and/or metal compounds and/or sliding lacquers.

5. Arrangement according to one of Claims 1 to 4, **characterized in that** the sliding seal surface (8), with which contact is made, of the gate valve (2) is of planar, spherical, cylindrical or conical form.

6. Arrangement according to one of Claims 1 to 5, **characterized in that** the solid lubricant abrasion body (4) is in the form of a strip-shaped, cylindrical or cuboidal profile.

7. Arrangement according to one of Claims 1 to 6, **characterized in that** the solid lubricant transfer rate from the solid lubricant abrasion body (4) to the sliding seal surface (8) of the gate valve (2) is generated by a contact force of the solid lubricant abrasion body (4) against the sliding seal surface (8) of the gate valve (2).

8. Arrangement according to Claim 7, **characterized in that** contact force of the solid lubricant abrasion body (4) against the sliding seal surface (8) of the gate valve (2) is generated by a mechanical spring force and/or pneumatically and/or hydraulically and/or by means of a tangential force that is built up by the gate valve (2) during relative movement with respect to the solid lubricant abrasion body (4).

9. Arrangement according to one of Claims 1 to 8, **characterized in that** the solid lubricant abrasion body (4) is positioned, separately from the seal system (3) to be lubricated, in a housing of the heat engine.

10. Arrangement according to one of Claims 1 to 9, **characterized in that** the solid lubricant abrasion body (4) is situated close to the seal system (3) and to its sliding surfaces (9) to be lubricated.

11. Arrangement according to one of Claims 1 to 10, **characterized in that** the solid lubricant abrasion body (4) surrounds a sealing boundary or concentrically encompasses a slide ring (6) of the seal system (3).

12. Arrangement according to one of Claims 1 to 11, **characterized in that** the solid lubricant abrasion body (4) is displaceable with respect to a slide ring (6) or a sealing element of a sealing boundary of the seal system (3), with respect to the sliding seal surface (8) of the gate valve (2), or is fixedly connected thereto.

13. Arrangement according to Claim 11 or 12, **characterized in that** gas discharge ducts (12) are provided such that the solid lubricant abrasion body (4), owing to the gas discharge ducts (12), has no influence on the sealing action of the slide sealing ring (6) or of the sealing element of a sealing boundary of the seal system (3).

14. Arrangement according to one of Claims 1 to 13, **characterized in that** means are provided by which the rate of abrasion of the solid lubricant abrasion body (4) can be set by way of the geometry, contact force and material thereof, independently of the geometry and load of the seal system (3) to be lubricated.

## Revendications

1. Agencement (1) d'une soupape à tiroir (2) et d'un système d'étanchéité (3) pour l'étanchéification de la soupape à tiroir (2), comprenant une lubrification solide entre la soupape à tiroir (2) et le système d'étanchéité (3), destiné à être utilisé dans un moteur thermique, la soupape à tiroir (2) comprenant une surface d'étanchéité à glissement (8) sur laquelle glisse le système d'étanchéité (3) qui réalise au moins temporairement l'étanchéité d'un espace de travail et/ou de conduites du moteur thermique, **caractérisé par** au moins un corps abrasif de lubrifiant solide (4) qui constitue un composant indépendant du système d'étanchéité (3), ce corps abrasif de lubrifiant solide (4) étant en contact avec la surface à lubrifier (8) de la soupape à tiroir (2) du système tribologique constitué par la soupape à tiroir (2) et le système d'étanchéité (3), et qui, lors du déplacement relatif par rapport à cette surface à lubrifier (8), transfère sur cette dernière, par abrasion, du lubrifiant solide qui sert au moins à la lubrification partielle de la surface (8).

2. Agencement selon la revendication 1, **caractérisé en ce que** le corps abrasif de lubrifiant solide (4) est en contact avec au moins une partie de la surface d'étanchéité à glissement (8) de la soupape à tiroir (2) et le corps abrasif de lubrifiant solide, lors du déplacement relatif par rapport à la surface d'étanchéité à glissement (8) de la soupape à tiroir (2), transfère sur celle-ci, par abrasion, du lubrifiant solide qui sert au moins à la lubrification partielle de la surface d'étanchéité à glissement (8) de la soupape à tiroir (2).

3. Agencement selon la revendication 1 ou 2, **caractérisé en ce que** le corps abrasif de lubrifiant solide (4) est constitué d'un matériau qui contient au moins partiellement un lubrifiant solide.

4. Agencement selon l'une quelconque des revendications 1 à 3, **caractérisé en ce que** des lubrifiants solides à base de carbone et/ou utilisant des plastiques et/ou des composés métalliques et/ou des vernis de glissement sont utilisés.

5. Agencement selon l'une quelconque des revendications 1 à 4, **caractérisé en ce que** les surfaces d'étanchéité à glissement (8) en contact de la soupape à tiroir (2) sont réalisées de manière plane, sphérique, cylindrique ou conique.

6. Agencement selon l'une quelconque des revendications 1 à 5, **caractérisé en ce que** le corps abrasif de lubrifiant solide (4) est réalisé sous forme de profilé en forme de baguette, cylindrique ou parallélépipédique.

7. Agencement selon l'une quelconque des revendications 1 à 6, **caractérisé en ce que** le taux de transfert de lubrifiant solide du corps abrasif de lubrifiant solide (4) sur la surface d'étanchéité à glissement (8) de la soupape à tiroir (2) est produit par une force de pression du corps abrasif de lubrifiant solide (4) contre la surface d'étanchéité à glissement (8) du tiroir (2).

8. Agencement selon la revendication 7, **caractérisé en ce que** la force de pression du corps abrasif de lubrifiant solide (4) contre la surface d'étanchéité à glissement (8) du tiroir (2) est produite par une force de ressort mécanique et/ou de manière pneumatique et/ou de manière hydraulique et/ou par une force tangentielle qui met en place la soupape à tiroir (2) lors du déplacement relatif par rapport au corps abrasif de lubrifiant solide (4).

9. Agencement selon l'une quelconque des revendications 1 à 8, **caractérisé en ce que** le corps abrasif de lubrifiant solide (4) est positionné séparément du système d'étanchéité (3) à lubrifier dans un boîtier du moteur thermique.

10. Agencement selon l'une quelconque des revendications 1 à 9, **caractérisé en ce que** le corps abrasif de lubrifiant solide (4) se trouve à proximité du système d'étanchéité (3) et de ses surfaces de glissement (9) à lubrifier.

11. Agencement selon l'une quelconque des revendications 1 à 10, **caractérisé en ce que** le corps abrasif de lubrifiant solide (4) entoure une barrière d'étanchéité ou entoure de manière concentrique une bague de glissement (6) du système d'étanchéité (3).

12. Agencement selon l'une quelconque des revendications 1 à 11, **caractérisé en ce que** le corps abrasif de lubrifiant solide (4) est déplaçable contre, ou peut être relié fixement à, une bague de glissement (6) ou un élément d'étanchéité d'une barrière d'étanchéité du système d'étanchéité (3), contre la surface d'étanchéité à glissement (8) de la soupape à tiroir (2).

13. Agencement selon la revendication 11 ou 12, **caractérisé en ce que** des canaux d'échappement de gaz (12) sont prévus, de telle sorte que le corps abrasif de lubrifiant solide (4) n'exerce, au moyen des canaux d'échappement de gaz (12), aucune influence sur l'effet d'étanchéité de la bague d'étanchéité à glissement (6) ou de l'élément d'étanchéité d'une barrière d'étanchéité du système d'étanchéité (3).

14. Agencement selon l'une quelconque des revendications 1 à 13, **caractérisé en ce que** des moyens sont prévus, au moyen desquels le taux d'usure du corps abrasif de lubrifiant solide (4) peut être ajusté au moyen de sa géométrie, de sa force de pression et de son matériau, indépendamment de la géométrie et de la sollicitation du système d'étanchéité (3) à lubrifier.
